# EUROPÄISCHE PATENTSCHRIFT

(11) **EP 1 368 383 B1**
(45) Veröffentlichungstag und Bekanntmachung des Hinweises auf die Patenterteilung: **11.08.2004**
(21) Anmeldenummer: 02710046.0
(22) Anmeldetag: 29.01.2002
(51) Int. Cl.: C08F 2/24

(54) **VERWENDUNG VON NEUEN ALKYL- UND ARYLALKOXYLATEN ALS EMULGATOREN IN DER EMULSIONSPOLYMERATION**
USE OF NOVEL ALKYL AND ARYL ALKOXYLATES AS EMULSIFIERS IN EMULSION POLYMERISATION
UTILISATION DE NOUVEAUX ALCOXYLATES D'ALKYLE ET D'ARYLE EN TANT QU'EMULSIFIANTS DANS LA POLYMERISATION EN EMULSION

(30) Priorität: 10.02.2001 DE 10106145
(43) Veröffentlichungstag der Anmeldung: 10.12.2003
(73) Patentinhaber: Clariant GmbH, 65929 Frankfurt am Main (DE)
(72) Erfinder: AHRENS, Hendrik, 65931 Frankfurt (DE); FALK, Uwe, 63486 Bruchköbel (DE)
(74) Vertreter: Mikulecky, Klaus
(86) Internationale Anmeldenummer: PCT/EP2002/000880
(87) Internationale Veröffentlichungsnummer: WO 2002/064637

(56) Entgegenhaltungen:
- EP-A- 0 279 384
- DE-A- 19 503 099
- PATENT ABSTRACTS OF JAPAN vol. 1999, no. 02, 26. Februar 1999 (1999-02-26) & JP 10 298210 A (KAO CORP), 10. November 1998 (1998-11-10)

## Beschreibung

Die vorliegende Erfindung betrifft die Verwendung von Alkyl- und Arylalkoxylaten als Emulgatoren in Emulsionspolymerisationen.

Die für die Emulsionspolymerisation nach dem Stand der Technik eingesetzten Emulgatoren sind zumeist anionische und nichtionische Emulgatoren.

Übliche anionische Emulgatoren sind Natrium-, Kalium- und Ammoniumsalze von Fettsäuren, Natriumalkylbenzolsulfonate, Natriumalkylsulfonate, Natriumolefinsulfonate, Natriumpolynaphthalensulfonate, Natriumdialkyldiphenyletherdisulfonate, Natrium-, Kalium- und Ammoniumalkylsulfate, Natrium-, Kalium- und Ammoniumalkylpolyethylenglykolethersulfate, Natrium-, Kalium- und Ammoniumalkylphenolpolyethylenglykolethersulfate, Natrium-, Kalium- und Ammoniummono- und dialkylsulfosuccinate und monoalkylpolyoxethylsulfosuccinate, sowie Alkylpolyethylenglykoletherphosphorsäuremono-, di- und triester und deren Mischungen und Alkylphenolpolyethylenglykoletherphosphorsäuremono-, di- und triester und deren Mischungen, sowie deren Natrium-, Kalium- und Ammoniumsalze.

Als nichtionische Emulgatoren werden üblicherweise Alkylphenolpolyethylenglykolether, Alkylpolyethylenglykolether, Fettsäurepolyethylenglykolether, Ethylen/Propylenglykol-Blockpolymere und Sorbitanesterpolyethylenglykolether eingesetzt.

Emulsionspolymerisationen werden unter Verwendung anionischer und nichtionischer Emulgatoren in der Regel unter Gesamtansatzvorlage oder im Zulaufverfahren durchgeführt, bei der nur ein kleiner Teil der zu polymerisierenden Monomeren im Polymerisationsgefäß vorgelegt und der größere Teil (50 bis 100 Gew.-%) während des Fortschreitens der Polymerisation zugesetzt wird. Die anionischen oder nichtionischen Emulgatoren werden wahlweise während der Emulsionspolymerisation im Zulauf oder in der Reaktorvorlage eingesetzt, oder nachträglich der hergestellten Polymerdispersion zur Stabilisierung zugesetzt.

Im Stand der Technik sind verschiedene Arten von Emulgatoren für die Emulsionspolymerisation beschrieben.

DE-A-42 06 429 offenbart die Verwendung von Mischungen aus Ethylenoxid/Propylenoxid-Blockpolymerisaten, ethoxylierten Alkylphenolen und ethoxylierten Polysacchariden als Emulgator für Emulsionspolymerisationen. Die Blockpolymerisate enthalten einen Polypropylenglykolblock, der von zwei Polyethylenglykolblöcken flankiert wird, und weisen ein zahlenmittleres Molekulargewicht von 250 bis 20 000 auf, und enthalten Ethylenoxid (EO) und Propylenoxid (PO) im molaren Verhältnis EO:PO von 0,05 bis 20. Die dort offenbarten Alkylphenole enthalten nur EO- und keine PO-Einheiten, und müssen wegen der mangelnden tensidischen Eigenschaften der EO-Einheiten längerkettige Alkylsubstituenten am Aromaten tragen.

EP 0 894 809 A2 beschreibt die Verwendung von Alkylarylpolyglykolethern und Alkylpolyglykolethern mit jeweils 3 bis 50 mol EO-Einheiten als Emulgator für Emulsionspolymerisationen. Eine Verwendung von PO-Einheiten wird nicht offenbart. Auch hier ist die Verwendung langer Alkyl- und Alkylarylketten erforderlich.

EP 0 279 384 B1 beschreibt die Verwendung eines polyethoxylierten Derivates eines langkettigen Alkylphenols mit 30 bis 40 Ethylenoxideinheiten, bei dem die Alkylgruppe 7 bis 18 Kohlenstoffatome enthält, als Emulgator. Das Dokument offenbart ferner die Verwendung von Polyoxyethylenethanol und Polyoxypropylenethanol, nicht aber die Verwendung von Mischalkoxylaten als Emulgatoren.

EP 0 457 642 A1 beschreibt die Verwendung von EO/PO-Blockpolymerisaten sowie von Tri-sec.-butylphenolpolyethylenglykolethern mit 4 und 30 mol Ethylenoxideinheiten als Emulgator für die Emulsionspolymerisation von Chloropren. Die verzweigte Substitution des Aromaten ist hier wegen der mangelnden tensidischen Eigenschaften der EO-Ketten erforderlich. Das Dokument offenbart ferner die Verwendung von gemischt alkoxylierten Estern und Amiden als Emulgatoren, nicht aber eine entsprechende Eignung carbonylfreier Mischalkoxylate.

DE 195 03 099 A1 beschreibt die entsprechende Verwendung nichtionischer Emulgatoren vom Typ der Alkylpolyalkylenglykolether, wobei der Vorteil einer Mischalkoxylierung für kurzkettige, hydrophile Alkylreste nicht konkretisiert ist. Kennzeichnend für diese Verbindungen ist, dass ihr Trübungspunkt unterhalb der Polymerisationstemperatur liegt. Bevorzugt sind Alkylpolyethylenglykolether, die Alkylgruppen mit 4 bis 24 Kohlenstoffatomen und 2 bis 14 mol Ethylenoxideinheiten, und kein PO, enthalten. Eine Mischalkoxylierung wird nur bei den von hydrophoben Fettalkoholen abgeleiteten Fettalkylpolyalkylenglykolethern offenbart.

Aufgabe vorliegender Erfindung war es daher, neue Emulgatoren für die Emulsionspolymerisation aufzufinden, die eine verbesserte physikalischchemische Stabilität der Emulsionspolymerisate gewährleisten. Hierbei sollte insbesondere darauf geachtet werden, daß keine teuren Bestandteile, wie beispielsweise Fettalkohole oder mit längeren als Methylresten substituierte Aromaten, zu deren Herstellung erforderlich sind.

Es wurde nun gefunden, dass mit Alkyl- und Arylalkoxylaten, die eine Mischalkoxylierung aus Ethylenoxid (EO) einerseits und Propylenoxid / Butylenoxid (PO/BuO) andererseits aufweisen, als Emulgatoren in der Emulsionspolymerisation stabile und koagulatarme Polymerdispersionen hergestellt werden können.

Gegenstand der Erfindung ist somit die Verwendung von Verbindungen der Formel 1 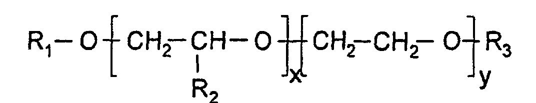 worin
R₁ ein Alkyl- oder Alkenylrest mit 1 bis 6 Kohlenstoffatomen oder ein Phenyl-, Methylphenyl- oder Dimethylphenylrest,
R₂ ein Methyl- oder Ethylrest,
R₃ ein Wasserstoffatom oder ein Methylrest,
x eine Zahl von 1 bis 50 und
y eine Zahl von 1 bis 500 ist,
als Emulgator in der Emulsionspolymerisation.

In einer bevorzugten Ausführungsform ist R₁ ein Alkyl- oder Alkenylrest. R₁ hat vorzugsweise zwischen 1 und 6, insbesondere zwischen 1 und 4 Kohlenstoffatome. Der Alkohol, von dem sich der erfindungsgemäße Emulgator durch Alkoxylierung ableiten läßt, ist vorzugsweise ein hydrophiler Alkohol. Unter hydrophil wird hier eine Mischbarkeit des Alkohols mit Wasser in Mengen von mindestens 0,01 Gew.-%, vorzugsweise 0,05 Gew.-%, insbesondere 0,1 Gew.-%, speziell 0,3 Gew.-% verstanden.

In einer weiteren bevorzugten Ausführungsform der Erfindung liegt x zwischen 2 und 30. In einer weiteren bevorzugten Ausführungsform der Erfindung liegt y zwischen 10 und 100. In einer weiteren bevorzugten Ausführungsform der Erfindung beträgt das Verhältnis zwischen x und y von x:y = 1:10 bis 1:2.

Ein weiterer Gegenstand der Erfindung ist ein Verfahren zur Herstellung von Emulsionspolymerisaten, gekennzeichnet durch die Zugabe einer Verbindung der Formel 1 vor, während oder nach Beginn der Polymerisationsreaktion.

In einer besonders bevorzugten Ausführungsform betrifft die Erfindung die Verwendung von Alkyl- und Arylalkoxylaten der Formel (1) zur Herstellung stabiler Polymerdispersionen in der Polymerisation von olefinisch ungesättigten Verbindungen, wie sie nun beschrieben werden sollen.

Die verwendeten Monomere für die Herstellung von Polymerdispersionen nach dem Emulsionspolymerisationsverfahren sind beispielsweise
- Vinylmonomere, wie Carbonsäureester des Vinylalkohols, beispielsweise Vinylacetat, Vinylpropionat, Vinylether der Isononansäure oder der Isodecansäure,
- Arylsubstituierte Olefine, wie Styrol und Stilben
- olefinisch ungesättigte Carbonsäureester, wie Methylacrylat, Ethylacrylat, Propylacrylat, n-Butylacrylat, i-Butylacrylat, Pentylacrylat, Hexylacrylat, 2-Ethylhexylacrylat, Hydroxyethylacrylat sowie die entsprechenden Methacrylsäureester,
- olefinisch ungesättigte Dicarbonsäureester, wie Dimethylmaleinat, Diethylmaleinat, Dipropylmaleinat, Dibutylmaleinat, Dopentylmaleinat, Dihexylmaleinat und Di-2-ethylhexylmaleinat,
- olefinisch ungesättigte Carbonsäuren und Dicarbonsäuren, wie Acrylsäure, Methacrylsäure, Itaconsäure, Maleinsäure und Fumarsäure und ihre Natrium-, Kalium- und Ammoniumsalze,
- olefinisch ungesättigte Sulfonsäuren und Phosphonsäuren und ihre Alkaliund Ammoniumsalze, wie Acrylamidomethylpropansulfonsäure und ihre Alkali- und Ammonium-, Alkylammonium und Hydroxyalkylammoniumsalze, Allylsulfonsäure und ihre Alkali- und Ammoniumsalze, Acryloyloxethylphosphonsäure und ihre Ammonium- und Alkalisalze sowie die entsprechenden Methacrylsäurederivate,
- olefinisch ungesättigte Amine, Ammoniumsalze, Nitrile und Amide, wie Dimethylaminoethylacrylat, Acryloyloxethyltrimethylammoniumhalide, Acrylnitril, N-Methylacrylamid, N-Ethylacrylamid, N-Propylacrylamid, N-Methylotacrylamid sowie die entsprechenden Methacrylsäurederivate und Vinylmethylacetamid.

In einer bevorzugten Ausführungsform werden die oben genannten Monomere mit weiteren Comonomeren, vorzugsweise Olefinen oder halogenierten Olefinen mit 2 bis 8 Kohlenstoffatomen wie z.B. Ethylen, Propen, Butene, Pentene, 1,3-Butadien, Chloropren, Vinylchlorid, Vinylidenchlorid, Vinylidenfluorid und Tetrafluorethylen polymerisiert.

Zur Herstellung der Polymerdispersionen werden die mit Wasser nicht mischbaren Monomere im allgemeinen mit Hilfe der erfindungsgemäßen Emulgatoren in der wässrigen Phase in Form von Mizellen fein verteilt und die radikalische Polymerisationsreaktion durch Initiatoren wie beispielsweise Ammonium-, Natrium- und Kaliumperoxodisulfat gestartet.

Weitere Hilfs- und Zusatzstoffe für die Verwendung mit den erfindungsgemäßen Emulgatoren können Schutzkolloide wie Carboxymethylcellulose, Hydroxyethylcellulose, Methylhydroxypropylcellulose, sowie teil- und vollverseifter Polyvinylalkohol sein.

Eine Übersicht über gängige Verfahren, Tenside und weitere Hilfsmittel der Emulsionspolymerisation geben Peter A. Lovell und Mohamed S. El-Aasser, in "Emulsion Polymerization and Emulsion Polymers", erschienen bei John Wiley and Sons, 1997.

Die erfindungsgemäßen Alkyl- und Arylalkoxylate lassen sich während der Emulsionspolymerisation verwenden, in dem sie im Reaktionsgefäß vor Beginn der Polymerisationsreaktion vorgelegt oder während der Polymerisationsreaktion dem Reaktionsgefäß zugegeben werden. Eine andere Variante ist die Zugabe der erfindungsgemäßen Alkyl- und Arylalkoxylate nach Abschluß der Polymerisationsreaktion zu Verbesserung der Stabilität der Polymerdispersion.

Die erfindungsgemäßen Alkyl- und Arylalkoxylate können sowohl alleine als auch in Kombination mit anderen bereits bekannten anionischen und nichtionischen Emulgatoren des Standes der Technik verwendet werden, wie sie eingangs beschrieben wurden. Die Menge der anionischen und nichtionischen Emulgatoren des Standes der Technik beträgt dann vorzugsweise 0,05 bis 5, insbesondere 0,08 bis 3 % und besonders bevorzugt 0,1 bis 2 Gew.-% bezogen auf das Gewicht der nicht oder wenig wasserlöslichen Monomere.

In einer besonders bevorzugten Ausführungsform werden die erfindungsgemäßen Alkyl- und Arylalkoxylate der Formel (1) in Kombination mit anionischen Emulgatoren verwendet.
Im allgemeinen werden die erfindungsgemäßen Alkyl- und Arylalkoxylate der Formel (1) in Mengen von 0,1 bis 10, vorzugsweise 0,2 bis 5, insbesondere 0,4 bis 4 Gew.-%, bezogen auf das Gewicht der für die Herstellung der Polymerdispersion verwendeten nicht oder wenig wasserlöslichen Monomere als Emulgatoren verwendet.

Die mit den erfindungsgemäßen Alkyl- und Arylalkoxylaten hergestellten Polymerdispersionen zeigen eine geringe Koagulatbildung während und nach der Polymerisation und eine Verbesserung der Scher-, Temperatur- und Lagerstabilität, der Gefrier/Taustabilität und die Elektrolytstabilität gegenüber zweiund dreiwertigen Kationen wie Calcium, Barium und Aluminium. Weiterhin ist ein Verbesserung der Filmeigenschaften der aus den Polymerdispersionen hergestellen Polymerfilme zu beobachten. Die mit den erfindungsgemäßen Alkylund Arylalkoxylaten hergestellten Polymerdispersionen bilden Filme mit geringer Wasseraufnahme, einen geringen Weißanlauf bei Kontakt mit Wasser und gute Nass- und Trockenreibechtheiten.

### Beispiele

### 1. Vinylacetat-Dispersion

Es werden 1700 g einer Monomeremulsion bestehend aus 473,2 g vollentsalztem Wasser, 2,8 g Netzer SB 10 (65 %ige Lösung von Natriumdiisodecylsulfosuccinat in einem Wasser/Isopropanolgemisch, Clariant GmbH), 24 g eines erfindungsgemäßen n-Butylalkoxylates mit 4 mol Propylenoxid und 30 mol Ethylenoxid, 300 g ® VeoVa10 (lsodecansäurevinylester, Shell) und 900 g Vinylacetat sowie eine Initiatorlösung bestehend aus 3,6 g Kaliumperoxodisulfat und 304,4 g vollentsalztem Wasser hergestellt.

In einem 3 Liter Reaktionsgefäß werden 356,9 g vollentsalztes Wasser vorgelegt und unter Rühren mit einem Ankerrührer nacheinander 2,8 g Netzer SB 10 (65 %ige Lösung von Natriumdiisodecylsulfosuccinat in einem Wasser/ Isopropanolgemisch), 24,0 g ®Tyfose H 200 YG4 (Hydroxylethylcellulose, Clariant GmbH), 6,0 g Borax, 2,6 ml Essigsäure, 170 g der zuvor hergestellten Monomerdispersion und 92,3 g der Initiatorlösung zugegeben. Anschließend wird die Emulsion unter Stickstoffatmosphäre in einem Wasserbad auf 76°C erwärmt, so dass die radikalische Polyadditionsreaktion beginnt. Die Reaktionstemperatur wird durch Kühlen oder Heizen über das Wasserbad konstant bei 79 bis 81°C gehalten. Nach 15 Minuten werden über einen Zeitraum von 3 Stunden die restlichen 1530 g der Monomeremulsion zugegeben. Zur Initiierung der radikalischen Polyadditionsreaktion werden über einen zweiten Zulauf die restlichen 215,7 g der Initiatorlösung innerhalb eines Zeitraumes von 3 Stunden und 15 Minuten zugegeben. Danach wird das Reaktionsgemisch weitere 2 Stunden bei 80°C unter Rühren und unter Stickstoffatmosphäre gerührt und anschließend auf Raumtemperatur abgekühlt. Zur Konservierung werden der hergestellten Polymerdispersion 3,6 g ® Nipacide Cl15, Nipa Laboratories Ltd., zugesetzt.

Die resultierende Polymerdispersion hat einen Feststoffgehalt von 50 % und ein Koagulat von < 0,010 % über einem 100 µm-Sieb und von < 0,015 % über einem 40 µm-Sieb.

### 2. Styrol/Acrylat-Dispersion

Es werden 1700 g einer Monomeremulsion bestehend aus 531,7 g vollentsalztem Wasser, 29,3 g ®Emulsogen EPA 073 (Natriumalkylpolyethylenglykolethersulfat, Clariant GmbH), 22 g eines erfindungsgemäßen n-Butylalkoxylates mit 4 mol Propylenoxid und 30 mol Ethylenoxid, 6 g Natriumhydrogencarbonat, 360 g Styrol, 500 g n-Butylacrylat, 240 g Methylacrylat und 11 g Methacrylsäure sowie eine Initiatorlösung bestehend aus 5,55 g Ammoniumperoxodisulfat und 142,5 ml vollentsalztem Wasser hergestellt.

In einem 3 Liter Reaktionsgefäß werden 344,5 g vollentsalztes Wasser vorgelegt und 7,3 g Emulsogen EPA 073 (Natriumalkylpolyethylenglykolethersulfat) zugegeben. Unter Stickstoffatmosphäre und Rühren mit einem Ankerrührer wird die Emulgatorlösung im Reaktionsgefäß auf 80°C erwärmt. Anschließend werden 37 ml Initiatorlösung und 42,5 ml der Monomeremulsion zugegeben. Die radikalische Polyadditionsreaktion beginnt. Über das Wasserbad wird das Reaktionsgemisch gekühlt und konstant bei 79 - 81°C gehalten. Die restlichen 1657,5 g der Monomeremulsion und 111 g der Initiatorlösung werden über einen Zeitraum von 3 Stunden zugegeben. Anschließend wird über das Wasserbad das Reaktionsgemisch eine weiter Stunde bei 80°C gehalten und dann auf Raumtemperatur abgekühlt. Der pH-Wert der hergestellten Polymerdispersion wird mit 12,5 %iger Ammoniak-Lösung auf pH 7 - 8 eingestellt.

Die resultierende Polymerdispersion hat einen Feststoffgehalt von 51 % und ein Koagulat von < 0,010 % über einem 100 µm-Sieb und von < 0,015 % über einem 40 µm-Sieb.

### 3. Reinacrylat-Dispersion

Es werden 1800 g einer Monomeremulsion bestehend aus 341,2 g vollentsalztem Wasser, 72,3 g Emulsogen EPA 073 (Natriumalkylpolyethylenglykolethersulfat), 20,3 g eines erfindungsgemäßen Methylalkoxylates mit im Zahlenmittel 3,2 mol Propylenoxid und 40 mol Ethylenoxid, 2,2 g Dodecylmercaptan, 150 g Methylmethacrylat, 350 g 2-Ethylhexylacrylat, 850 g n-Butylacrylat und 14 g Methacrylsäure sowie 57 g einer Initiatorlösung bestehend aus 7,1 g Ammoniumperoxodisulfat und 49,9 g vollentsalztem Wasser hergestellt.

In einem 3 Liter Reaktionsgefäß werden 263 g vollentsalztes Wasser vorgelegt und unter Stickstoffatmosphäre über ein Wasserbad auf 80°C erwärmt. Anschließend werden 17 g der Initiatorlösung zugegeben und sofort mit der kontinuierlichen Zugabe der 1800 g Monomeremulsion und der restlichen 40 g Initiatorlösung begonnen. Die Dosierung beider Komponenten erfolgt unter ständigem Rühren mit einem Ankerrührer und unter Stickstoffatmosphäre innerhalb eines Zeitraumes von 3 Stunden. Danach wird das Reaktionsgemisch für eine weitere Stunde bei 80°C temperiert und anschließend auf Raumtemperatur abgekühlt. Der pH-Wert der hergestellten Polymerdispersion wird mit 12,5 %iger Ammoniak-Lösung auf pH 7 - 8 eingestellt.

Die resultierende Polymerdispersion hat einen Feststoffgehalt von 65 % und ein Koagulat von < 0,10 % über einem 100 µm-Sieb und von < 0,12 % über einem 40 µm-Sieb.

## Patentansprüche

1. Verwendung von Verbindungen der Formel 1 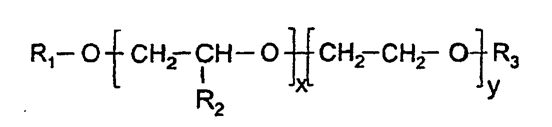 worin
R₁ ein Alkyl-oder Alkenylrest mit 1 bis 6 Kohlenstoffatomen oder ein Phenyl-, Methylphenyl- oder Dimethylphenylrest,
R₂ ein Methyl- oder Ethylrest,
R₃ ein Wasserstoffatom oder ein Methylrest,
x eine Zahl von 1 bis 50 und
y eine Zahl von 1 bis 500 ist,
als Emulgator in der Emulsionspolymerisation.

2. Verwendung von Verbindungen gemäß Anspruch 1, **dadurch gekennzeichnet, dass** R₃ ein Wasserstoffatom ist.

3. Verwendung von Verbindungen gemäß Anspruch 1 und/oder 2, **dadurch gekennzeichnet, dass** x eine Zahl von 1 bis 20 ist.

4. Verwendung von Verbindungen gemäß einem oder mehreren der Ansprüche 1 bis 3, **dadurch gekennzeichnet, dass** y eine Zahl von 1 bis 100 ist.

5. Verwendung von Verbindungen gemäß einem oder mehreren der Ansprüche 1 bis 4, **dadurch gekennzeichnet, dass** bei der Emulsionspolymerisation olefinisch ungesättigte Verbindungen in wässrigem Medium miteinander nach dem radikalischen Additionsverfahren polymerisieren.

6. Verwendung von Verbindungen gemäß einem oder mehreren der Ansprüche 1 bis 5, **dadurch gekennzeichnet, dass** die Verbindungen in Kombination mit üblichen anionischen Emulgatoren, ausgewählt aus der Gruppe bestehend aus
- Natrium-, Kalium- und Ammoniumsalze von Fettsäuren
- Natriumalkylsulfonate,
- Natriumolefinsulfonate,
- Natriumalkylbenzolsulfonate,
- Natriumpolynaphthalensulfonate,
- Natriumdialkyldiphenyletherdisulfonate,
- Natrium-, Kalium- und Ammoniumalkylsulfate,
- Natrium-, Kalium- und Ammoniumalkylpolyethylenglykolethersulfate,
- Natrium-, Kalium- und Ammoniumalkylphenolpolyethylenglykolethersulfate
- Natrium-, Kalium- und Ammoniummono- und dialkylsulfosuccinate und monoalkylpolyoxethylsulfosuccinate, sowie
- Alkylpolyethylenglykoletherphosphorsäuremono-, di- und triester und deren Mischungen und Alkylphenolpolyethylenglykoletherphosphorsäuremono-, di- und triester und deren Mischungen, sowie deren Natrium- Kalium- und Ammoniumsalze
eingesetzt werden.

7. Verwendung von Verbindungen gemäß einem oder mehreren der Ansprüche 1 bis 5, **dadurch gekennzeichnet, dass** die Verbindungen in Kombination mit üblichen nichtionischen Emulgatoren, ausgewählt aus der Gruppe bestehend aus
- Alkylphenolpolyethylenglykolether,
- Alkylpolyethylenglykolether,
- Fettsäurepolyethylenglykolether,
- Ethylen/Propylenglykol - Blockpolymere und
- Sorbitanesterpolyethylenglykolether
eingesetzt werden.

8. Verfahren zur Herstellung von Emulsionspolymerisaten, **dadurch gekennzeichnet, dass** die Verbindungen der Formel 1 gemäß den Ansprüchen 1 bis 4 vor, während oder nach dem Polymerisationsprozess dem Polymerisationsansatz zugegeben werden.

9. Verfahren zur Herstellung von Emulsionspolymerisaten gemäß Anspruch 8, **dadurch gekennzeichnet, dass** die Verbindungen der Formel 1 gemäß den Ansprüchen 1 bis 4 in Mengen von 0,1 bis 10 Gew.-% bezogen auf das Gewicht der für die Herstellung der Polymerdispersion verwendeten nicht oder wenig wasserlöslichen Monomere verwendet werden.

10. Verfahren zur Herstellung von Emulsionspolymerisaten gemäß Anspruch 8 und/oder 9, **dadurch gekennzeichnet, dass** die Verbindungen der Formel 1 gemäß den Ansprüchen 1 bis 4 in Kombination mit anionischen Emulgatoren eingesetzt werden, wobei die Menge der anionischen Emulgatoren 0,05 bis 5 Gew.-% bezogen auf das Gewicht der nicht oder wenig wasserlöslichen Monomere beträgt.

## Claims

1. The use of compounds of the formula 1 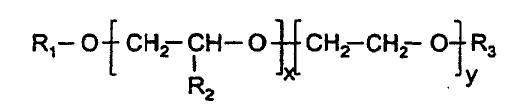 in which
R₁ is an alkyl or alkenyl radical having 1 to 6 carbon atoms or a phenyl, methyl phenyl or dimethyl phenyl radical,
R₂ is a methyl or ethyl radical,
R₃ is a hydrogen atom or a methyl radical,
x is a number from 1 to 50 and
y is a number from 1 to 500,
as emulsifier in emulsion polymerization.

2. The use of compounds as claimed in claim 1, wherein R₃ is a hydrogen atom.

3. The use of compounds as claimed in claim 1 and/or 2, wherein x is a number from 1 to 20.

4. The use of compounds as claimed in one or more of claims 1 to 3, wherein y is a number from 1 to 100.

5. The use of compounds as claimed in one or more of claims 1 to 4, wherein, in the emulsion polymerization, olefinically unsaturated compounds polymerize in aqueous medium with one another by the free-radical addition process.

6. The use of compounds as claimed in one or more of claims 1 to 5, wherein the compounds are used in combination with customary anionic emulsifiers chosen from the group consisting of
- sodium, potassium and ammonium salts of fatty acids
- sodium alkylsulfonates,
- sodium olefinsulfonates,
- sodium alkylbenzenesulfonates,
- sodium polynaphthalenesulfonates,
- sodium dialkyl diphenyl ether disulfonates,
- sodium, potassium and ammonium alkyl sulfates,
- sodium, potassium and ammonium alkylpolyethylene glycol ether sulfates,
- sodium, potassium and ammonium alkylphenol polyethylene glycol ether sulfates,
- sodium, potassium and ammonium mono- and dialkyl sulfosuccinates and monoalkyl polyoxethylsulfosuccinates, and
- alkylpolyethylene glycol ether phosphoric mono-, di- and triesters and mixtures thereof and alkylphenol polyethylene glycol ether phosphoric mono-, di- and triesters and mixtures thereof, and sodium, potassium and ammonium salts thereof.

7. The use of compounds as claimed in one or more of claims 1 to 5, wherein the compounds are used in combination with customary nonionic emulsifiers chosen from the group consisting of
- alkylphenol polyethylene glycol ethers,
- alkylpolyethylene glycol ethers,
- fatty acid polyethylene glycol ethers,
- ethylene/propylene glycol block polymers and
- sorbitan ester polyethylene glycol ethers.

8. A process for the preparation of emulsion polymers, wherein the compounds of the formula 1 as in claims 1 to 4 are added to the polymerization mixture before, during or after the polymerization process.

9. The process for the preparation of emulsion polymers as claimed in claim 8, wherein the compounds of the formula 1 as in claims 1 to 4 are used in amounts from 0.1 to 10% by weight, based on the weight of the water-insoluble or sparingly water-soluble monomers used for the preparation of the polymer dispersion.

10. The process for the preparation of emulsion polymers as claimed in claim 8 and/or 9, wherein the compounds of the formula 1 as in claims 1 to 4 are used in combination with anionic emulsifiers, where the amount of anionic emulsifiers is 0.05 to 5% by weight, based on the weight of the water-insoluble or sparingly water-soluble monomers.

## Revendications

1. Utilisation de composés de formule 1 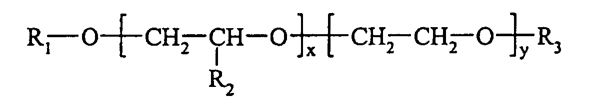 dans laquelle
R₁ est un radical alkyle ou alcényle ayant 1 à 6 atomes de carbone ou un groupe phényle, méthylphényle ou diméthylphényle,
R₂ est un groupe méthyle ou éthyle,
R₃ est un atome d'hydrogène ou un groupe méthyle,
x est un nombre de 1 à 50, et
y est un nombre de 1 à 500,
en tant qu'émulsifiants lors d'une polymérisation en émulsion.

2. Utilisation de composés selon la revendication 1, **caractérisée en ce que** R₃ est un atome d'hydrogène.

3. Utilisation de composés selon les revendications 1 et/ou 2, **caractérisée en ce que** x est un nombre de 1 à 20.

4. Utilisation de composés selon l'une ou plusieurs des revendications 1 à 3, **caractérisée en ce que** y est un nombre de 1 à 100.

5. Utilisation de composés selon l'une ou plusieurs des revendications 1 à 4, **caractérisée en ce que**, lors de la polymérisation en émulsion, des composés à insaturation oléfinique vont se polymériser les uns avec les autres en milieu aqueux par le procédé d'addition radicalaire.

6. Utilisation de composés selon l'une ou plusieurs des revendications 1 à 5, **caractérisée en ce que** les composés sont utilisés en combinaison avec des émulsifiants anioniques usuels choisis dans le groupe comprenant :
- les sels de sodium, de potassium et d'ammonium d'acides gras,
- les alkylsulfonates de sodium,
- les oléfinesulfonates de sodium,
- les alkylbenzènesulfonates de sodium,
- les polynaphtalènesulfonates de sodium,
- les dialkyldiphénylétherdisulfonates de sodium,
- les alkylsulfates de sodium, de potassium et d'ammonium,
- les alkylpolyéthylèneglycoléthersulfates de sodium, de potassium et d'ammonium,
- les alkylphénolpolyéthylèneglycoléthersulfates de sodium, de potassium et d'ammonium,
- les mono- et dialkylsulfosuccinates et monoalkylpolyoxéthylsulfosuccinates de sodium, de potassium et d'ammonium, ainsi que
- les monoesters, les diesters et les triesters d'acides alkylpolyéthylèneglycolétherphosphoriques, et leurs mélanges, et les monoesters, diesters et triesters d'acides alkylphénolpolyéthylèneglycolétherphosphoriques et leurs mélanges, ainsi que leurs sels de sodium, de potassium et d'ammonium.

7. Utilisation de composés selon l'une ou plusieurs des revendications 1 à 5, **caractérisée en ce que** les composés sont utilisés en combinaison avec des émulsifiants non ioniques usuels choisis dans le groupe comprenant
- les alkylphénolpolyéthylèneglycoléthers,
- les alkylpolyéthylèneglycoléthers,
- les acides gras de polyéthylèneglycoléthers,
- les copolymères à blocs éthylène/propylèneglycol, et
- les esters du sorbitan-éther de polyéthylèneglycol.

8. Procédé de préparation de polymères en émulsion, **caractérisé en ce que** les composés de formule 1 selon les revendications 1 à 4 sont ajoutés à la masse de polymérisation avant, pendant ou après l'opération de polymérisation.

9. Procédé de préparation de polymères en émulsion selon la revendication 8, **caractérisé en ce que** les composés de formule 1 selon les revendications 1 à 4 sont utilisés en des quantités de 0,1 à 10 % en poids par rapport au poids des monomères insolubles dans l'eau ou peu solubles dans l'eau utilisés pour préparer la dispersion de polymères.

10. Procédé de préparation de polymères en émulsion selon les revendications 8 et/ou 9, **caractérisé en ce que** les composés de formule 1 selon les revendications 1 à 4 sont utilisés en combinaison avec des émulsifiants anioniques, la quantité des émulsifiants anioniques étant de 0,05 à 5 % en poids par rapport au poids des monomères insolubles dans l'eau ou peu solubles dans l'eau.
